Europäisches Patentamt

European Patent Office

Office européen des brevets

(11) Publication number: **0 131 461**
**B1**

(12) **EUROPEAN PATENT SPECIFICATION**

(45) Date of publication of patent specification: **04.10.89**

(51) Int. Cl.⁴: **G 01 G 23/01, G 01 G 23/37**

(21) Application number: **84304663.2**

(22) Date of filing: **06.07.84**

(54) Span adjustment in electronic weighing apparatus.

(30) Priority: **07.07.83 JP 124508/83**
**08.07.83 JP 125241/83**
**11.07.83 JP 126585/83**

(43) Date of publication of application:
**16.01.85 Bulletin 85/03**

(45) Publication of the grant of the patent:
**04.10.89 Bulletin 89/40**

(84) Designated Contracting States:
**BE DE GB NL SE**

(56) References cited:
**GB-A-2 020 825**
**US-A-4 024 533**

**PATENTS ABSTRACTS OF JAPAN, vol. 6, no. 217 (P-152) 1095r, 30st October 1982; & JP - A - 57 120 820 (TOKYO DENKI K.K.) 28-07-1982**

(73) Proprietor: **KABUSHIKI KAISHA ISHIDA KOKI SEISAKUSHO**
**44, Shogoin Sannou-cho Sakyo-ku Kyoto-shi Kyoto 606 (JP)**

(72) Inventor: **Naito, Kazufumi**
**Haitsu-Nishiohtsu 302 4-5, Yanagasaki Ohtsu-shi Shiga (JP)**

(74) Representative: **Fane, Christopher Robin King et al**
**HASELTINE LAKE & CO. Hazlitt House 28 Southampton Buildings Chancery Lane London, WC2A 1AT (GB)**

Courier Press, Leamington Spa, England.

**Description**

The present invention relates to a system for adjusting the span of an electronic weighing apparatus or scale, for example to an electronic scale span adjusting system capable of correcting the span of an electronic scale according to a variation in an output voltage from a weight sensor.

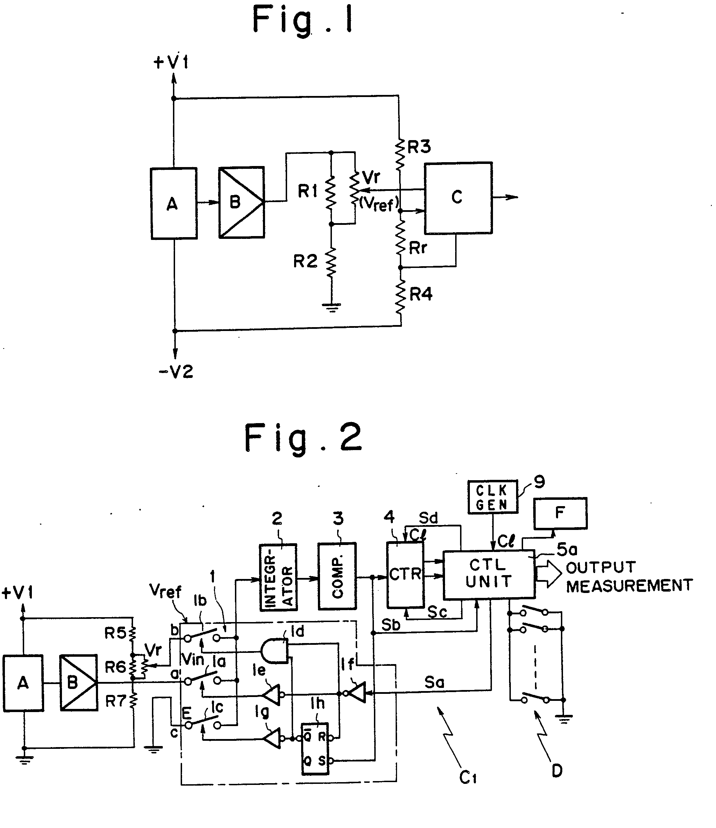

Fig. 1 of the accompanying drawing illustrates a span adjustment circuit in a conventional electronic scale.

Designated in Fig. 1 at A is a weight sensor comprising a load cell, B an amplifier for amplyfying an output voltage from the weight sensor A, R1 and R2 voltage-dividing resistors for dividing an output from the amplifier B, C an A/D converter of the double-integrating type, and Vr a variable resistor having input terminals connected across the voltage-dividing resistor R1 and an output terminal connected to an input terminal of the A/D converter C.

The variable resistor Vr had a resistance selected to be much larger than that of the voltage-dividing resistor R1 so that the effect of shift in the resistance of the variable resistor Vr in the combined resistance of the same and the resistance of the voltage-dividing resistor R1 will be reduced. The A/D converter C has a reference voltage imput terminal supplied with a voltage obtained by suitably dividing a voltage (V1 + V2), applied across the weight sensor A, through voltage-dividing resistors R3, Rr, R4 for achieving tracking with respect to the weight sensor A. The span of the scale can be adjusted by varying the resistance of the variable resistor Vr.

As is well known, the resistance of the variable resistor Vr tends to shift undesirably owing to vibrations, temperature changes, and with time. Even with the circuit arrangement of Fig. 1, in which the effect of any shift in the resistance of the variable resistor Vr can be reduced, the span of the scale tends to be subject to changes owing to an undesirable shift in the resistsnce of the variable resistor Vr. To place such a span change in all allowable range, the variable range of the variable resistor Vr should be reduced to make negligible any influence by shifts in the resistance of the variable resistor Vr. However, since the rated output voltage from the weight sensor A is subject to significantly wide variation, it would sometimes be impossible to make an accurate scale span adjustment if the variable range of the variable resistor Vr were reduced.

It has been conventional practice to change the reference voltage applied to the A/D converter C in dependence upon the output voltage from the weight sensor A, in order to put any scale span change in an allowable range. Such a change in the reference voltage, however, requires the selection, soldering attachment and replacement of the voltage-dividing resistors R3, Rr, R4. However, such a procedure is inefficient and the cost of manufacture of the circuitry is therefore high.

Accordingly, it is desirable to provide span setting means whereby the span of an electronic scale can be adjusted more easily, reliably and quickly than in the prior art.

According to a first aspect of the present invention there is provided span setting circuitry, for an electronic scale which provides a voltage signal proportional to the weight of an item being weighed thereby and has an integrating-type analogue-to-digital converter for deriving a digital output from the said voltage signal, including adjustment means arranged and connected for use to adjust an operating parameter of the converter, when the scale is loaded with a preselected known weight, to bring the said digital output towards a desired value corresponding to the said preselected known weight;

characterised in that the said adjustment means comprise switching means operable to switch the adjustment means between a coarse mode of operation, in which an initial integration time of the converter is adjustable by the adjustment in means in preset steps, and a fine mode of operation in which a voltage input to the converter is adjustable continuously by means of a variable resistor.

According to a second aspect of the present invention there is provided a method of setting the span of an electronic scale which provides a voltage signal proportional to the weight of an item being weighed thereby and which has an integrating-type analogue-to-digital converter for deriving a digital output from the said voltage signal, in which an operating parameter of the converter is adjusted, when the scale is loaded with a preselected known weight, to bring the said digital output towards a desired value corresponding to the said preselected known weight; characterised in that an initial integration time of the converter is coarsely adjusted in preset steps and a voltage input to the converter is then adjusted continuously by means of a variable resistor.

In such span setting means the coarse adjustment of the digital output may be used using a DIP switch, for example, whereafter the variable resistor is used to adjust the digital output more finely. Thus, the span setting operation can be performed more easily than in the prior art, by avoiding the need to replace the voltage-dividing resistors, since the variable resistor need only have a comparatively small variable range.

In an embodiment of the present invention in which the coarse adjustment is effected by means of a DIP switch, since the span is adjusted not on an analog basis but on a digital basis, a ratio of adjustemnt in which an output value from the A/D converter can be increased to a certain count can be grasped simply, accurately, and speedily by operators who have comparatively little skill and experience in span adjustment.

GB—A—2,020,825 discloses span setting circuitry, for an electronic scale which provides a voltage signal proportional to the weight of an item being weighed thereby and has an integrating-type analogue-to-digital converter for deriving a digital output from the said voltage signal, including adjustment means arranged and connected for use to adjust an operating parameter of the converter, when the scale is loaded with a preselected known weight, to bring the said digital output towards a desired value corresponding to the said preselected known weight. However, such span setting circuitry does not operate in coarse and fine modes. Furthermore, a variable resistor is not employed in the circuitry proposed in GB—A—2,020,825, since span setting is performed automatically, in accordance with a computer program, and therefore more complex processing circuitry and greater memory capacity is required as compared with circuitry embodying the present invention.

Reference will now be made, by way of example, to the accompanying drawings, in which:

Fig. 1 (described above) is a block diagram of span setting circuitry in a conventional electronic weighing apparatus;

Fig. 2 is a block diagram of span setting circuitry embodying the first aspect of the present invention;

Fig. 3 is a block diagram of span setting circuitry embodying the first aspect of the present invention;

Fig. 4 is a diagram illustrative of operational characteristics of a double-integrating A/D converter;

Fig. 5 is a block diagram of span setting circuitry;

Fig. 6 is a timing chart showing operational characteristics of a double-integrating A/D converter;

Figs 7 and 8 are flowcharts for explaining operation of the span setting circuitry of Fig. 5;

Fig 9 is a diagram for use in explaining a method by which the span of an electronic weighing apparatus or scale may be adjusted;

Fig. 10 is a block diagram of span setting circuitry; and

Fig. 11 is a flowchart for explaining operation of a double-integrating A/D converter in the span setting circuitry of Fig. 10.

An electronic weighing apparatus or scale embodying the present invention is shown in Fig. 2. The electronic scale generally includes a weight sensor A comprising a load cell, an amplifier B for amplifying an output signal from the weight sensor A, a double-integrating A/D converter $C_1$ for converting an analog value of an output signal from the amplifier B into a digital value, and a display unit F for displaying that digital value.

The double-integrating A/D converter $C_1$ has an analog switch 1 at an input terminal thereof, an integrator 2, a comparator 3, a counter 4 and a control unit 5a. The analog switch 1 is operative to select one of three input signals applied thereto, that is either a reference voltage (Vref), an analog signal (Vin) indicative of a measured weight value, or a ground voltage E, the analog switch 1 having an output terminal connected for applying those input signals individually to an input circuit of the integrator 2. The analog switch 1 comprises three switching elements 1a, 1b, 1c, composed of functional elements such as FETs, an AND gate 1d for driving the switching elements, inverters 1e, 1f, 1g, and a flip-flop (hereinafter referred to as an "FF") 1h. The integrator 2 serves to integrate an analog voltage delivered thereto by the analog switch 1 for a prescribed interval of time and to issue an output signal to a comparator 3. The comparator 3 is operative to deliver a count stop (signal) Sb to the counter 4 and control unit 5a when the output voltage from the integrator 2 reaches an initial integration starting voltage (normally zero V). (Actually, the output signal from the comparator 3 is of low level when the signal received thereby is zero, and is of a high level when the signal received thereby is other than zero, the count stop signal Sb being indicative of a change from the high level to the low level). The counter 4 is reset by a reset command Sc issued by the control unit 5a at the time the integrator 2 begins an inverse integration operation, whereupon it commences a counting operation which is stopped in response to the count stop signal Sb from the comparator 3. The counter 4 comprises a modulo-2 counter and is incremented upon receipt of each count pulse Sd issued by the control unit 5a in synchronism with one command cycle (of duration Ts) of a program contained in the control unit 5a. To allow the counter 4 to count a signal beyond its capacity, the control unit 5a is operative to count each overflow of the counter 4, and, when the counting operation of the counter 4 is finished, a total output count from the counter 4 is calculated from an output count of the counter 4 at that time and the number of overflows as counted by the control unit 5a. The calculated total output count is delivered, as the digital value corresponding to the input analog voltage Vin, to a main control apparatus (not shown) which controls the overall electronic scale. It may be possible for the control unit 5a to control the overall scale.

The control unit is, for example, in the form of a microcomputer composed of a central processing unit, a program memory, a working memory, and an input/output circuit. The control unit 5a is supplied with the count stop signal Sb from the comparator 3, in response to which control unit 5a issues a switching command Sa and the reset command Sc, and is also supplied with the count from the counter 4 which the control unit 5a issues as a digital output equivalent to the analog signal Vin.

The conversion of the analog signal Vin to a digital signal is performed by firstly applying that analog signal Vin to the integrator 2, which integrates the signal until the switching command Sa is issued. The timing of the switching command Sa is controlled by a software-implemented timer whose operating time can be adjusted so as to vary the time interval for which the analog signal Vin is integrated, i.e. so as to vary the "primary integration time". The switching command Sa is received by the analog switch 1 which is switched thereby so as to apply the reference voltage Vref to the integrator 2. The integrator 2, connected to the comparator 3, then performs an inverse integration operation until the output thereof falls to zero, whereupon the comparator 3 issues the count stop signal Sb, as mentioned above. The length of time required to perform the inverse integration operation, i.e. the "secondary integration time", is measured by the counter whose output gives the digital equivalent of the analog voltage Vin.

3

The operating time of the software-implemented timer is generally given in terms of the number of times a process (such as a non-instruction process), comprising a certain number of steps each of which is of a predetermined duration, is to be repeated.

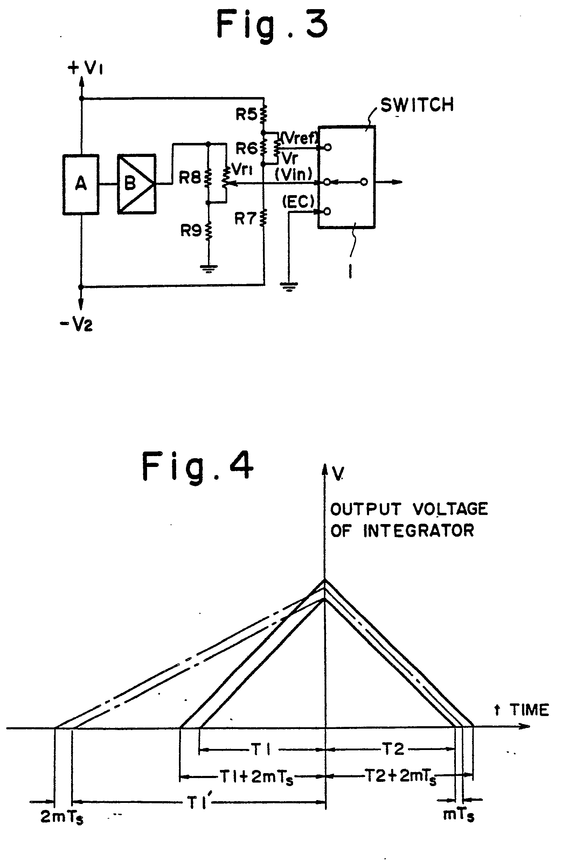

With reference to Fig. 4, which illustrates the primary and secondary integration times T1 and T2, if the analog input voltage Vin is equal to the reference voltage Vref when the scalepan to the electronic scale supports a load equal to the maximum weighing capacity of the scale, then the primary and secondary integration times T1 and T2 will be substantially equal to one another. Thus, if the primary integration time T1 is changed, by adjusting the operating time of the software-implemented timer, then the secondary integration time T2 will change accordingly. For example, if the operating time of the software-implemented timer is increased by a time period 2m.Ts, where Ts is the length of the command cycle and 2m is the number of extra steps to be executed by the timer, then the primary integration time T1, and hence the secondary integration time T2, will be increased by a time 2m.Ts, and the output of the counter 4, which is incremented upon receipt of every command cycle, will increase by 2m counts. Similarly, if the primary integration time T1' is equal to twice the secondary integration time T2 when the scalepen supports a load equal to the maximum weighing capacity, then an increase of 2m-Ts in the operating time of the software-implemented timer (and hence in the primary integration time T1') will produce an increase of m.Ts in the secondary integration time T2 and an increase of m counts in the output of the counter 4. Thus, in general, if the primary and secondary integration times T1 and T2 when the scalepen supports a load equal to the maximum weighing capacity are selected to satisfy the relationship $T1 \geqslant T2$, then the output of the counter 4 can be increased by an integer N whicb satisfies the relationship $N \leqslant n(T2/T1) < N+1$, where the primary integration time T1 is increased by a time interval corresponding to n steps.

Since the output of the counter 4, which output is the digital equivalent of the input analog signal Vin, can be adjusted by adjusting the operation time of the software-implemented timer, it is possible to perform a span adjustment operation, i.e. to adjust the output produced by the counter 4 when the scalepen is supporting a load equal to the maximum weighing capacity of the scale, by adjusting the operating time of the software-implemented timer. According to the present invention this adjustment is effected in two stages, these being a coarse adjustment stage, effected by setting means D of the circuitry, and a fine adjustment stage, effected by a variable resistor Vr (Fig. 2) or Vr1 (Fig. 3).

The setting means D are operable to change the operating time of the software-implemented timer in steps, of say 250 command cycles, and may comprise a DIP switch, for example. Thus, one-step adjustment of the setting means D can adjust the output of the counter 4 by 250 counts, for example. Where the setting means D is composed of a 4-bit DIP switch, it can effect a coarse adjustment of the operating time in 16 steps. In Figs. 2 the variable resistor Vr is arranged for finely adjusting the reference voltage Vref, while in Fig. 3 (in which parts identical to those in Fig. 2 are either omitted or are designated by the same references) the variable resistor Vr1 is arranged for finely adjusting the analog signal Vin. In Fig. 3 the output voltage from the amplifier B is divided by resistors R8 and R9 and the variable resistor Vr1 is connected in parallel with the resistor R8.

According to the present invention, a rough span adjustment is first made by the setting means D, and then a final adjustment is effected by the variable resistor Vr (Vr1 in Fig. 3). More specifically, a zero adjustment of the scale is first performed, for example by adjusting the balance of a bridge circuit in the weight sensor A, then a load corresponding to the maximum weighing capacity of the scale is placed on the scalepan, and the setting means D and the variable resistor Vr1 are operated to adjust the scale span so that a weight value displayed at this time (or, when the displayed value, at a time when there is no applied reference, is not zero, an output value from the A/D converter from which the displayed value is substracted, or such an output value as converted into a weight value) will be equalized to the actual weight (a count corresponding to the weight of the load or a value representing the weight of that load) of the load placed on the scalepan. The fine adjustment of the span is then performed by varying the reference voltage (or analog voltage Vin) by means of the variable resistor Vr(Vr1).

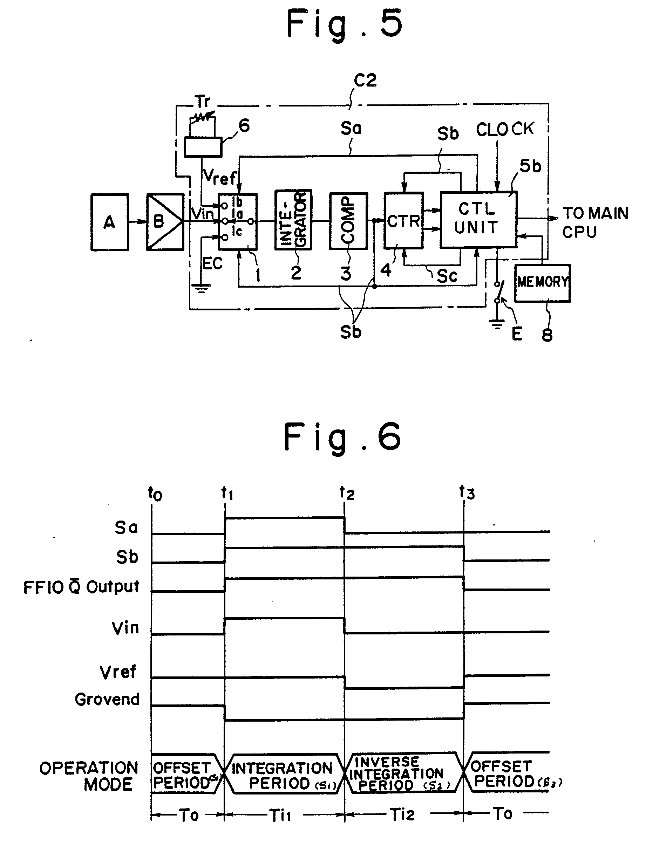

Reference will now be made to Figs. 5 to 11, which do not illustrate embodiments of the present invention, but have been included for assistance in better understanding the circuitry as a whole.

Fig. 5 shows in block form span setting circuitry, which does not embody the present invention, in which the operation of a software-implemented timer is automatically adjustable. Identical parts in Fig. 5 will be denoted by identical reference characters in Fig. 2 and will not be described in detail.

A span adjusting system shown in Fig, 5 includes a memory 8 for storing a digital value indicative of the weight of a reference load corresponding to the maximum capacity of the scale, adjusting means (which are not shown, but can be achieved by executing steps in a flowchart, described later) for reading the digital value from the memory 8 in response to a span adjustment command, comparing the read digital value with an output from an A/D converter $C_2$ at the time when the load corresponding to the maximum weighing capacity is placed on the scalepan, and adjusting the operating time of a software-implemented timer so that compared values will be equal to each other, and a span command switch E for commanding operation of the adjusting means, whereby the span of the scale can be adjusted automatically.

It is well known in the art that the span of a scale is affected by the gravitational acceleration of the Earth. Therefore, where the spans of electronic scales to be used in geographical areas subject to different gravitational accelerations are to be adjusted in a manufacturer's factory, it is necessary for the manufacturer to have many weights for the areas (hereinafter referred to as "area weights"), taking into account the gravitational accelerations of those areas, for respective weighing capacities. In the span adjustment, the area of use should be confirmed for each scale in selecting the area weight for that scale.

Accordingly, it can be quite tedious and time-consuming for a manufacturer to make span adjustments for each area. When areas of use are changed due to a variation in the market demand, the span has to be adjusted again. Therefore, such a change in areas of use has been a tremendous burden on the part of the manufacturer. The cost of keeping the various area weights in inventory has also been a great burden on the manufacturer. However, the need for such area weights can be avoided by use of the circuitry of Fig. 5, as will now be described.

As an example, let us assune that the memory 8 stores 10000 counts as the digital value in a scale designed such that its maximum weighing capacity is 2 kg and five counts of the output from the A/D converter correspond to 1g. However, such count storage is baded on the assumption that the location in which the span of the scale is adjusted and the location in which the scale is used are in the same geographical area. Where a different area of use is intended from that where the span adjustment is to be effected, the memory 8 stores a digital value indicative of a span taking into consideration the gravitational acceleration in that area, that is 9985 counts for Hokkaido, 10000 counts for Tokyo, and 10015 counts for Okinawa for example, A control unit 5b has an area indicating means (not shown) for reading the digital value representative of the area in which the scale is to be used. The span of the scale should be adjusted in accordance with the digital value corresponding to the area of use concerned.

The integrating operation of the double-integrating A/D converter will now be described with particular reference to the analog switch 1 (as shown in Fig. 2). The analog switch 1 is controlled by a switching signal Sa from the control unit 5b and a count stop signal Sb from the comparator 3. As shown in Fig. 6, an offset of the zero point of the integrator 2 is compensated for in an offset period To including a time $t_0$. In the offset period $T_0$, the FF 1h is set and $\underline{Q}$ and Q terminals thereof are at low and high levels, respectively. Since the output from the inverter 1g thereby goes high, the switching element 1c is turned on to apply the ground voltage E to the double integrating A/D converter. The double-integrating A/D converter is now in an offset period $S_3$.

When the switching command Sa is issued (indicating a transition from a low level to a high level) by the control unit 5b at a time $t_1$, the $\underline{Q}$ and Q terminals of the FF 1h go high and low, respectively. The output from the inverter 1g goes low, thereby turning off the switching element 1c, and the output from the inverter 1e goes high to turn on the switching element 1a, whereupon an analog signal Vin is applied to the input terminal of the integrator 2 to enable the latter to start an integrating operation. The double integrating A/D converter now enteres a Vin integrating period $S_1$ having duration $Ti_1$. When the integrator 2 issues an analog signal as a result of its integrating operation, the output from the comparator 3 goes high. The operation of the double integrating A/D converter remains unchanged if the signal Sb is changed from the low level to the high level.

At the time $t_2$, upon elapse of the time period $Ti_1$ (determined by a software-implemented timer, described later), the switching command Sa goes low and the output from the inverter 1e goes low, thus turning off the switching element 1a. The integrating operation on the input analog signal Vin is brought to an end. Since the output from the AND gate 1d goes high at the same time, the switching element 1b is turned on to apply the reference voltage Vref (a prescribed voltage having a polarity opposite to that of Vin) to the integrator 2 to enable the latter to effect an inverse integration in a period $S_2$.

When a time $t_3$, at which the output voltage from the integator 2 becomes zero, is reached as a result of the inverse integration, the output from the comparator 3 is changed from the high level to the low level (this transition signal serving as the count stop signal Sb) to set the FF 1h. The $\underline{Q}$ output terminal thereof goes low, thereby causing the output of the inverter 1g to go high, which turns on the switching element 1c. As the ground voltage E is now imposed on the intergrator 2, the operation of the double integrating A/D converter enters an offset period again at a time $t_3$.

The above operation is repeated at a constant period of time according to a program stored in the control unit 5b. The program instruction for the operation sequence and times, that is, the period S1 and the integrating time $Ti_1$ for integrating the analog input signal Vin and the offset period $S_3$ and the offset time $T_0$. The integrating time $Ti_1$ for integrating the analog input signal Vin can be set to any desired value according to the value of the input signal. Thus, the control unit 5b has a software-implemented timer for varying the integrating time $Ti_1$ for integrating the analog input signal Vin.

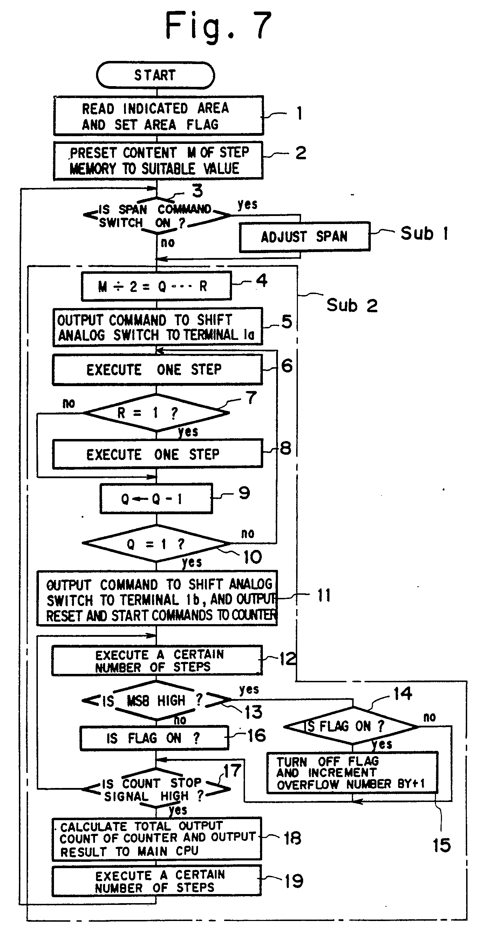

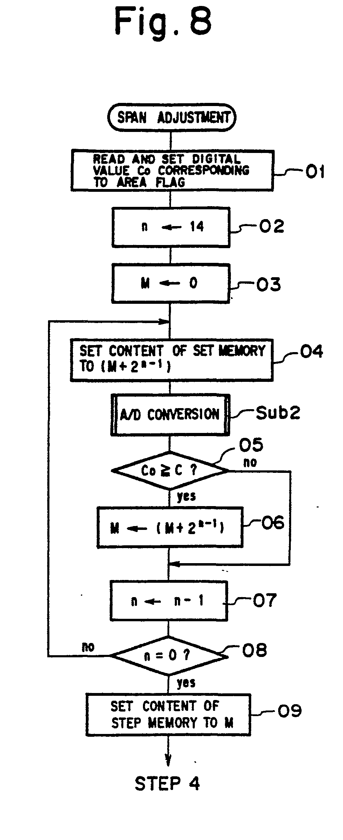

Operation of the circuitry of Fig. 5, taking into account the foregoing area adjustment, will now be described with reference to Figs. 7 and 8.

For the sake of brevity, it is assumed that the zero point adjustment of the scale has already been completed. An example will be taken in which, if the operating time of the software-implemented timer contained in the control unit 5b is adjusted to a time period corresponding to about ten thousand steps, then the output from the A/D converter at the time the load corresponding to the maximum weighing capacity is placed on the scalepan reaches ten thousand counts corresponding to the weight of the load placed on the scalepan.

The analog switch 1 has its contact connected to the terminal 1c at the time of initialization.

When the program is run, the control unit 5b reads the digital value corresponding to an area of use from the area indicating means and sets up a flag corresponding to the indicated area in a step 1. To determine the operating time of the software-implemented timer upon initialization, the control unit 5b presets a suitable value M in a step memory in a step 2. The step memory is contained in the control unit 5b, and the number of steps M (i.e. the number of times a command process having a constant processing time to be repeated) stored in the step memory controls the operating time of the software-implemented timer.

Then, the control unit 5b determines whether or ot the span command switch E is turned on in a step 3. If the span command switch is on, then the program enters a span adjustment subroutine Sub1 (described later), and if not, then the program goes to the A/D conversion process Sub2, which will now be described.

The A/D conversion process Sub2 begins with a step 4 in which the control unit 5b divides the step number M, stored in the step memory, by 2 to determine the number Q of times that a two-step (command) loop is to be executed, as will be described later. In step 4R represents a remainder, which is R = 0 when M is an even number and R = 1 when M is an odd number.

Then, the control unit 5b issues a command Sa to shift the contact of the analog switch 1 from the terminal 1c to the terminal 1a in a step 5, whereupon the integrator 2 begins to integrate (primary integration) an unknown voltage Vin.

The control unit 5b executes a process corresponding to M steps in the process from a step 6 to a step 10 in order to operate the contained software-implemented timer. More specifically, the control unit 5b first executes a process corresponding to one step in the step 6, and then determines whether R = 1 in the step 7. If R = 1, then a process of one step is executed in the step 8, and if R = 0, then the step 8 is skipped, and the program goes to the next step 9. Thus, when M is an even number, two steps are executed in the steps 6 and 7, and when M is an odd number, thre steps are executed in the steps 6 through 8. Then, the control unit 5b repeats the process of the loop (Q—1) times, whereupon the process corresponding to the M steps is substantially ended.

Upon completion of the above process, the control unit 5b issues a command Sa to shift the contact Sa to shift the contact of the analog switch 1 to the terminal 1b and also delivers a rest and start command Sc to the counter 4 in a step 11. The integration of the unknown input voltage Vin is completed, and an inverse integration (secondary integration) of the reference voltage Vref and the counting operation of the counter 4 are started.

In the period of the inverse integration (secondary integration), the control unit 5b checks whether the most significant bit (MSB) of the counter is high or low in a period shorter than half of the period in which the counter 4 reaches its full count, thus counting the number of overflows of the counter 4. More specifically, the control unit 5b gains time by executing a process composed of a number of steps in a step 12 and then checks whether the MSB is high or low in a next step 13. Since the MSB in half of the period in which the counter 4 reaches its full count is low, the initial result of the step 13 is NO, and a flag is rendered ON initially in the next step 16. Then, the control unit 5b checks whether the count stop signal Sb from the comparator 3 is high or low in a step 17. If the count stop signal is high as a consequence of checking, then the program goes to the next step 18, and if low the program reurns to the step 12. When half of the period, in which the counter 4 reaches its full count, has elapsed and the MSB has changed from the low state to the high state, while the above loop process was repeated, the program goes from the step 13 to a step 14.

In the step 14, the control unit 5b determines whether the flag is ON or not. If the flag is ON, it is rendered OFF in a succeeding step 15, and the number of overflows is incremented by + 1, whereupon the program goes to the step 17. If the flag is OFF, however, the step 15 is skipped during the half period in which the MSB is high, and the program goes to the step 17.

The control unit 5b thus monitors the count stop signal Sb from the comparator 3 while counting overflows of the counter 4. When the count stop signal Sb is high, the inverse integration of the reference voltage Vref and the shifting of the contact to the terminal 1c are completed, and the control unit 5b calculates a total output count C of the counter 4 for the count of the counter 4 and the number of counted overflows in a step 18. The control unit 5b then executes a process composed of a certain number of steps to gain time to compensate for an offset of the integrator 2 in a step 19. The programme now goes back to the step 3.

If the span command switch E is depressed at this time, the control unit 5b enters the span adjustment subroutine Subl.

Fig. 8 is a flowchart of successive steps of the span adjustment subroutine Subl. The illustrated process is the same as the process for determining a digital value corresponding to an unknown input in a so-called sequential comparison A/D converter. The control unit 5b is based on the preset area flag. to read a corresponding compensated digital value Co (10000 counts for example) from the memory 8, and sets the digital value Co in a given register in a step 01. The digital value Co serves as a target count which is to be issued from the A/D converter $C_2$.

Then the control unit 5b sets a number $n$, is a multiple of 2, to 14, clears the content M of the step memory to 0, and sets a temporary value of $M + 2^{13}$ (i.e. $M + 2^{n-1}$) = 8192 in the step memory in steps 02 through 04. The control unit 5b then executes a process corresponding to the step number (=8192) in the process constituted by the steps — 6 through 10 of the foregoing A/D conversion process Sub2, whereby the operating time of the software-implemented timer is finished. In a step 05 of the control unit 5b compares an output value C from the counter 4 in the step 18 with the digital value Co or the target count. If the output value C of the counter 4 does not reach the digital value Co as a result of the comparison, then the operating time of the software-implemented timer is insufficient, and the control unit 5b renews the content M of the step memory to 8192 in a step 06. Then, the control unit 5b decreases the number $n$ to 13, and goes through a step 08 back to step 04. In the step 04, $8192 + 2^{12} = 12288$ is set as a temporary value in the step memory. The control unit 5b then determines a count C of the counter 4 in the A/D conversion process Sub2, and compares it with the target count digital value Co in the next step 05. If the output value of the counter 4 exceeds the digital valve Co as a consequence of the comparison, then the operating time of the software-implemented timer is excessive, and the process of the step 06 is skipped and the above temporary value (122288) is neglected. The program then goes through the steps 07, 08 back to the step 04. The control unit 5b now sets $8192 + 2^{11} = 10240$ as a temporary value in the step memory.

The above cycle is repeated by the control unit 5b until $n$ becomes 0 while renewing the stored content M of the step memory. When $n$ becomes 0, the output value C of the counter 4 is equal to the target count digital value Co, and hence the content M of the step memory is fixed in a step 09 as 10000 determined in the step 06. The program then returns to the A/D conversion process Sub2. The span of the scale has now been adjusted at this time.

The above illustrated example is directed, for the sake of brevity, to a span adjustment in which the primary and secondary integrating times of the A/D converter are substntially equal to each other at the time when a load corresponding to the maximum weighing capacity is placed on the scaleplan. In general, however, the primary integrating time is selected as being longer than the secondary integrating time as shown in Fig. 4 and the output value of the counter 4 can be adjusted one count by adjusting the number of steps of the software-implemented timer. With such an arrangement, a complete span adjustment can be performed simply by adjusting the operation time of the software-implemented timer without adjusting the input voltage of the A/D converter and the like.

While in the above example the method of determining the operating time of the software-implemented timer is the same as that of determining the output value of a sequential comparison A/D converter, the operating time of the software-implemented timer could be determined by another method, which will now be described.

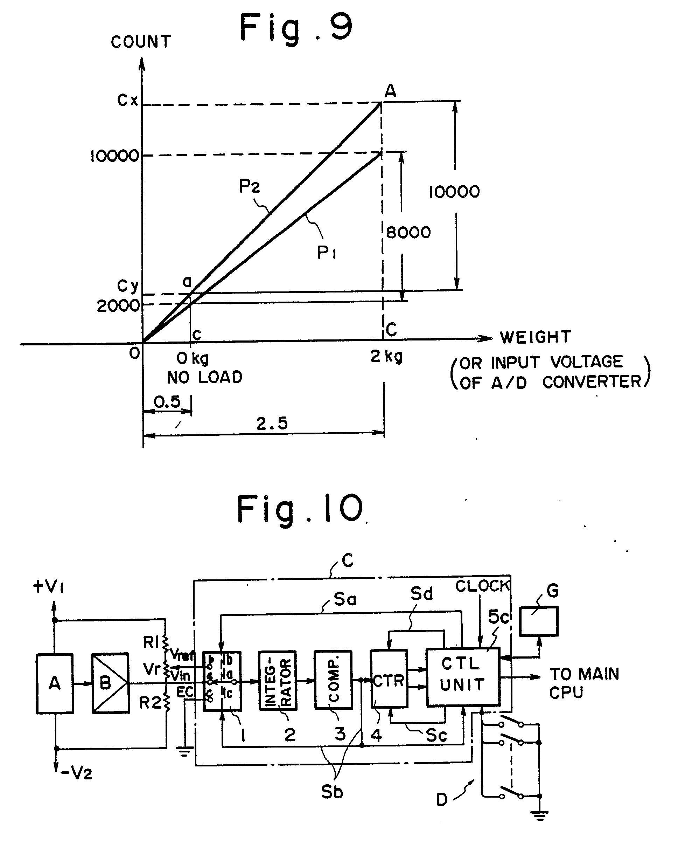

It is assumed that the output value of the double-integrating A/D converter incorporated in the scale is 2000 counts at a time when no load is applied to the scaleplan, and 10000 counts at a time a load of 2 kg is placed on the scaleplan, so that the scale has a span of 8000 counts, as indicated by the straight line P1 in Fig. 9. The operating time of the software-implemented timer at this time is T.

Let us assume that the span of this scale is to be adjusted to 10000 counts.

The operating time of the software-implemented timer capable of changing the span of the scale to 10000 counts is set to Tx, and the output value of the double integrating A/D converter is Cy counts at the time of no load, and Cx counts at the time a load of 2 kg is placed on the scaleplan, as indicated by the straight line P2 in Fig. 9, Since the following relation exists in Fig. 9:

$$\text{Triangle AOC } \alpha \text{ triangle aOc} \tag{1}$$

an apparent load placed on the scalepan at the original (where the output value of the A/D converter is 0) of the illustrated coordinate system is −0.5 kg.

From the above relation (1), the following equation can be derived:

$(2 + 0.5): Cx = 0.5: Cy$

$Cx: Cy = 10000$ counts

By solving these simultaneous equations,

$Cx = 12500$ counts

$Cy = 2500$ counts

The operating times Tx, T of the software-implemented timer and the output counts at the time have the following proportionality relationship:

$T: 10000 = Tx: 12500$

Therefore,

$Tx = T \times (12500/10000) = 1.25\,T$

Accordingly, the span of the scale can be adjusted to 10000 counts by multiplying the operating time T of the software-implemented timer prior to the span adjustment by 1.25.

As a consequence, if the current operating time of the software-implemented timer, the output value of the A/D converter at the time of no load, and the output value of the A/D converter at the time a load corresponding to the maximum weighing capacity is placed on the scalepan are known, the operating time Tx of the software-implemented timer at the time a span adjustment is completed can be derived uniquely.

The abscissa of Fig. 9 is representative of the weight values (or input voltages of the A/D converter) of articles to be placed on the scalepan, and the ordinate indicates output values of the A/D converter which are issued in dependence upon the placed weights.

Further span setting circuitry (not embodying the present invention) whereby any span error due to the difference in gravitational accelerations between different geographical locations can easily be corrected, will now be described with reference to Fig. 10. In Fig. 10, an input means D comprises an area indicating means for indicating one of a plurality of geographical areas, divided according to different gravitational accelerations in those areas, in which the scale is to be used. For scales having an accuracy of 1/3000 or higher, the whole land of Japan is divided into 16 geographical areas.

7

Designated at G in Fig. 10 is a memory for storing operating times of the software-implemented timer which are calculated for the respective geographical areas so that the span remains constant in each area. The stored operating times may comprise operating times of the software-implemented timer for the respective areas, or deviation times calculated from the operating times, that is deviations of the operating times of the software-implemented timer for the respective areas from a reference operating time of the software-implemented timer for a particular area.

The following Table 1 shows: the gravitational accelerations of 16 geographical areas of Japan; span deviations of a scale which has an accuracy of 1/3000, a maximum weighing capacity of 3 kg, and is designed to produce 5 counts per 1 g, with the span in the first area being used as a reference; operating times of the software-implemented timer for the respective areas, which times can make the spans in the area constant; and other data.

Table 1

| Area | Gravitational acceleration $(m/s^2)$ | Span deviation (g) | Count corrs. to weighing capacity | Count deviation | Operating time = step |
|---|---|---|---|---|---|
| 1 | 9.806 | 0 | 15000 | 0 | 15000 |
| 2 | 9.805 | -0.306 | 14998 | -2 | 15002 |
| 3 | 9.804 | -0.612 | 14997 | -3 | 15003 |
| 4 | 9.803 | -0.918 | 14995 | -5 | 15005 |
| 5 | 9.802 | -1.224 | 14994 | -6 | 15006 |
| 6 | 9.801 | -1.530 | 14992 | -8 | 15008 |
| 7 | 9.800 | -1.836 | 14991 | -9 | 15009 |
| 8 | 9.799 | -2.143 | 14989 | -11 | 15011 |
| 9 | 9.798 | -2.449 | 14988 | -12 | 15012 |
| 10 | 9.797 | -2.755 | 14986 | -14 | 15014 |
| 11 | 9.796 | -3.061 | 14985 | -15 | 15015 |
| 12 | 9.795 | -3.367 | 14983 | -17 | 15017 |
| 13 | 9.794 | -3.673 | 14982 | -18 | 15018 |
| 14 | 9.793 | -3.980 | 14980 | -20 | 15020 |
| 15 | 9.792 | -4.286 | 14978 | -22 | 15022 |
| 16 | 9.791 | -4.592 | 14977 | -23 | 15023 |

The numerical values indicated as the count corresponding to the weighing capacity are representative of spans of the A/D converter in the respective areas to which the scale having its span adjusted in the first area is transferred. The operating times of the software-implemented timer are those in the respective areas which can make the spans in the areas 15000 counts.

The operating time of the software-implemented timer is such that the input voltage and reference voltage of the A/D converter C are adjusted to be equal at a time when a load corresponding to the maximum weighing capacity is placed on the scalepan, and the output value of the A/D converter C is adjusted by one count by adjusting the operating time of the software-implemented timer by one step. The operating time is set to 15000 steps in the first area, and to 15023 steps in the sixteenth area to offset the

8

difference between the output count from the A/D converter in the first area and that in the sixteenth area which is 23 steps fewer than the former at the time the load corresponding to the maximum weighing capacity is placed on the scalepan.

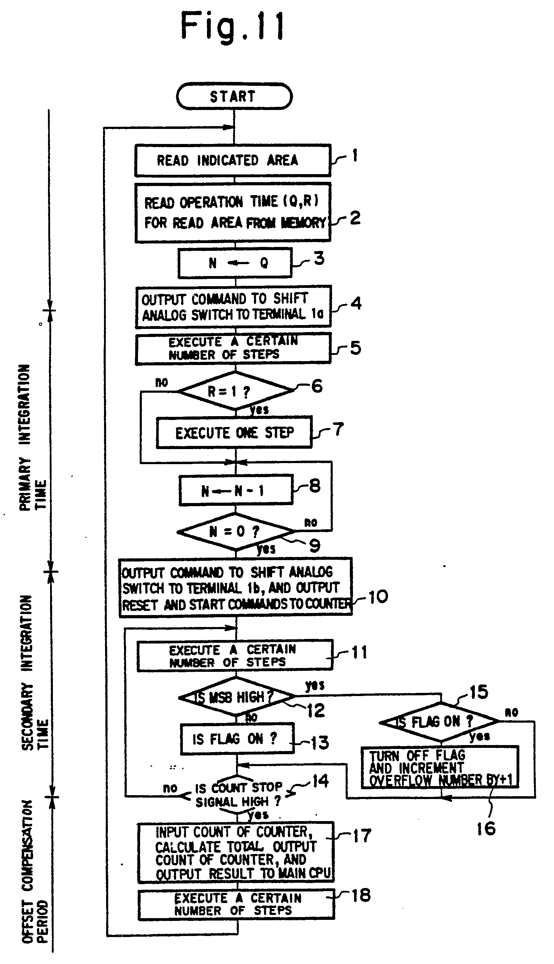

A control unit 5c in Fig. 10 has control means for reading the operating time of the software-implemented timer indicated by the area indicating means D from the memory G and controlling the operating time of the software-implemented timer in accoradance with that read operating time, the control means achieving these functions by executing the steps which will now be described with reference to the flowchart of Fig. 11.

For the sake of brevity, it is assumed that the reference voltage Vref of the A/D converter C and the input voltage Vin of the A,D converter C at the time a load corresponding to the maximum weighing capacity is placed on the scalepan are equalized by operation of the variable resistor Vr, and that the contact of the analog switch 1 is connected to the terminal 1c.

When the program is run, the control unit 5c reads a value indicative of the area of use preset by the area indicating means D and reads the corresponding operating time of the software-implemented timer from the memory G in steps 1 and 2. The operating time thus read may be 15000 steps for the first area and 15002 steps for the second area, or may be 2 steps for the first area and 4 steps for the second area as deviations from a reference that is 14998 steps, which are required to be fixed, as described later, during the operating time of the software-implemented timer. With this process of using deviations, an adjustment of one step, which is a minimum variable unit of the software-implemented timer, can easily be effected. The values Q and R for effecting the above deviations are determined from the following equation, and are stored in the memory G and will read out:

Operating time (number of steps) = 14998 + 2Q +R

Thus, for 1st area (15000), Q = 1, R = 0, for 2nd area (15002), Q = 2, R = 0, for 3rd area (15003), Q = 2, R = 1, for 4th area (15005), Q = 3, R = 1, for 16th area (15023), Q = 12, R = 1.

As Q is thus read, the control unit 5c sets Q as a processing number N which requires 2 steps for one loop process in a step 3, and then issues a command for shifting the contact of the analog switch 1 from the terminal 1c to the terminal 1a in a step 4. The integrator 2 now starts a primary integration on an unknown input voltage Vin.

The control unit 5c executes a process corresponding to 14997 steps as a fixed operating time in a step 5, and then determines whether R as read is 1 or not. If R is 1, then the control unit 5c executes a process of one step in a next step 7, and of R is 0, the step 7 is skipped and the program goes to a next loop process. Thus, a process corresponding to a total of 14998 steps is executed in the steps 5 and 6.

Then the control unit 5c repeats a process which requires two steps in one loop process N times. More specifically, the control unit 5c decrements N by 1 in a step 8, and determines whether N is 0 or not in a step 9. If N is not 0, the program returns to the step 8. The above loop process is repeated until N is 0. .

For example, since R = 1 in the 16th area, a process of 2 steps is executed and such a loop process is repeated 12 times. Therefore, for the 16th area, a process 14998 + 1 + 2 × 12 = 15023 steps.

After the process of steps corresponding to a prescribed operating time has been finished, the control unit 5c issues a command Sa to shift the contact of the analog switch 1 to the terminal 1b, and at the same time issues a reset and start command Sc to the counter 4 in a step 10. The integration of the unknown voltage Vin is ended, and an inverse integration of the reference voltage Vref and counting operation of the counter 4 are started.

As the period of the inverse integration (secondary integration) begins, the control unit 5c checks whether the most significant bits (MSB) of the counter 4 is high or low in a period shorter than half of a period in which the counter 4 reaches its full count, thus counting overflows of the counter 4.

More specifically, the control unit 5c gains time by executing a process composed of a number of steps in a step 11 and then checks whether the MSB is high or low in a next step 12. Since initially the MSB in half of the period in which the counter 4 reaches its full count is low, the results of the step 12 is NO, and a flag is set ON in a next step 13. Then, the control unit 5c checks whether the count stop signal Sb from the comparator 3 is high or low in a step 14. If the count stop signal is high as a consequence of checking, then the program goes to a next step 17, and if low the program returns to a step 11. When the half of the period in which the counter 4 reaches its full count elapses and the MSB has changed from the low state to the high state, while the above loop process is repeated, the program now goes from the step 12 to a step 15.

In the step 15, the control unit 5c determines whether the flag is ON or not. Since the flag is ON initially, it is rendered OFF in a succeeding step 16, and the number of overflows is incremented by + 1, whereupon the program jumps back to the step 14. Since the flag is OFF if the program goes back to the step 11 and proceeds from the step 12 to the step 15, the step 16 is now skipped during the half period in which the MSB is high, and the program jumps to the step 14.

The control unit 5c thus monitors the count stop signal Sb from the comparator 3 while counting overflows of the counter 4. When the count stop signal Sb is high, the inverse integration of the reference voltage Vref and the shifting of the contact to the terminal 1c are completed, and a total output count C of the counter 4 is calculated from the count of the counter 4 and the number of counted overflows in a step 17. The calculated result is then issued to the main CPU.

Then, a process composed of a certain number of steps is executed to gain time for effecting offset compensation of the integrator 2 in a step 18, and the program thereafter goes back to the step 1.

9

# EP 0 131 461 B1

Accordingly, each primary integrating time is controlled on the basis of the operating time of the software-implemented timer for the area specified by the area indicating means D. With the circuitry shown in Figs. 10 and 11, after the span of the scale has been adjusted to 15000 in a first span adjustment effected with a load corresponding to the maximum weighing capacity of the scale being placed on the scalepan, the span can be adjusted to 15000 counts in any desired area of use simply by causing the area indicating means D to indicate that desired area.

In the first span adjustment which is carried out with a load corresponding to the maximum weighing capacity being placed in the scalepan, however, the area indicating area D has to indicate the area in which the first span adjustment is effected.

## Claims

1. Span setting circuitry, for an electronic scale (A, B) which provides a voltage signal (Vin) proportional to the weight of an item being weighed thereby and has an integrating-type analogue-to-digital converter (C1) for deriving a digital output from the said voltage signal (Vin), including adjustment means (D Vr) arranged and connected for use to adjust an operating parameter of the converter, when the scale is loaded with a preselected known weight, to bring the said digital output towards a desired value corresponding to the said preselected known weight;
characterised in that the said adjustment means (D, Vr) comprise switching means operable to switch the adjustment means between a coarse mode of operation, in which an initial integration time of the converter (C1) is adjustable by the adjustment means in preset steps, and a fine mode of operation in which a voltage input to the converter (C1) is adjustable continuously by means of a variable resistor (Vr).

2. Circuitry as claimed in claim 1, whererin the said voltage input which is adjustable by means of the said variable resistor (Vr) is a reference voltage (Vref).

3. Circuitry as claimed in claim 1, wherein the said voltage input which is adjustable by means of the said variable resistor (Vrl) is said voltage signal (Vin).

4. Circuitry as claimed in claim 1, 2 or 3, wherein the said adjustment means (D, Vr) further comprise a DIP switch (D) by means of which the said integration time of the converter (C1) is adjustable.

5. A method of setting the span of an electronic scale (A, B) which provides a voltage signal (Vin) proportional to the weight of an item being weighed thereby and which has an integrating-type analogue-to-digital converter (C1) for deriving a digital output from the said voltage signal (Vin), in which an operating parameter of the converter (C1) is adjusted, when the scale is loaded with a preselected known weight, to bring the said digital output towards a desired value corresponding to the said preselected known weight; characterised in that an initial integration time of the character (C1) is coarsely adjusted in preset steps and a voltage input to the converter is then adjusted continuously by means of a variable resistor (Vr).

6. A method as claimed in claim 5, wherein the said voltage input which is adjusted by means of the said variable resistor (Vr) is a reference voltage (Vref).

7. A method as claimed in claim 5, wherein the said voltage input which is adjusted by means of the said variable resistor (Vr1) is the said voltage signal (Vin).

## Patentansprüche

1. Bereichseinstellschaltung für eine elektronische Waage (A, B) welche ein dem Gewicht eines durch die Waage gewogenen Gegenstandes proportionales Spannungssignal (Vin) erzeugt und einen integrierenden Analog-Digital-Wandler (C1) zum Ableiten eines digitalen Ausgangswertes aus dem Spannungssignal (Vin) aufweist, mit einer Einstelleinrichtung (D, Vr), die so angeordnet und geschaltet ist, daß sie, wenn die Waage mit einem vorgewählten bekannten Gewicht belastet ist, zum Einstellen eines Betriebsparameters des Wandlers verwendbar ist, um den digitalen Ausgangswert gegen einen dem vorgewählten bekannten Gewicht entsprechenden gewünschten Wert zu bringen;
dadurch gekennzeichnet, daß
die Einstelleinrichtung (D, Vr) Schaltmittel aufweist, die betätigbar sind zum Schalten der Einstelleinrichtung zwischen einem Grobbetriebsmodus, bei dem eine Anfangs-Integrationszeit des Wandlers (C1) durch die Einstelleinrichtung in voreingestellten Stufen einstellbar ist, und einem Feinbetriebsmodus, bei dem die Eingangsspannung des Wandler (C1) stufenlos durch einen Regelwiderstand (Vr) einstellbar ist.

2. Schaltung nach Anspruch 1, bei der die durch den Regerlwiderstand (Vr) eingestellte Eingangsspannung eine Referenzspannung (Vref) ist).

3. Schaltung nach Anspruch 1, bei der die durch den Regelwiderstand (Vr1) eingestellte Eingangsspannung das Spannungssignal (Vin) ist.

4. Schaltung nach Anspruch 1, 2 oder 3, bei der die Einstelleinrichtung (D, Vr) ferner einen DIP-Schalter (D) aufweist, durch den die Integrationszeit des Wandlers (C1) einstellbar ist.

5. Verfahren zur Bereichseinstellung einer elektronischen Waage (A, B), welche ein dem Gewicht eines durch die Waage gewogenen Gegenstandes proportionales Spannungssignal (Vin) erzeugt und einem integrierenden Analog-Digital-Wandler (C1) zum Ableiten eines digitalen Ausgangswertes aus dem Spannungssignal (Vin) aufweist, bei dem wenn die Waage mit einem vorgewählten bekannten Gewicht belastet ist, ein Betriebsparameter des Wandlers (C1) eingestellt wird, um den digitalen Ausgangswert gegen einen dem vorgewählten bekannten Gewicht entsprechenden gewünschten Wert zu bringen; dadurch gekennzeichnet, daß

eine Anfangs-Integrationszeit des Wandlers (C1) in voreingestellten Schritten grob eingestellt wird und dann eine Eingangsspannung zum Wandler stufenlos durch einen Regelwiderstand (Vr) eingestellt wird.

6. Verfahren nach Anspruch 5, bei dem die durch den Regelwiderstand (Vr) eingestellte Eingangsspannung eine Referenzspannung (Vref) ist.

7. Verfahren nach Anspruch 5, bei dem die durch den Regelwiderstand (Vr1) eingestellte Eingangsspannung das Spannungssignal (Vin) ist.

**Revendications**

1. Circuit d'établissement de portée pour une balance électronique (A, B) qui fournit un signal de tension (Vin) proportionnel au poids d'un article qu'elle pèse, et qui possède un convertisseur (C1) analogique/numérique du type à intégration, pour déduire un signal de sortie numérique du signal de tension (Vin), comprenant des moyens de réglage (D, Vr) arrangés et connectés pour être employés pour ajuster un paramètre de fonctionnement du convertisseur lorsque la balance est chargée d'un poids connu choisi à l'avance, pour amener le signal de sortie numérique vers une valeur désirée correspondant au poids connu choisi à l'avance,

caractérisé en ce les moyens de réglage (D, Vr) comprennent des moyens de commutation capables d'être actionnés pour commuter les moyens de réglage entre un mode grossier de fonctionnement dans lequel un temps d'intégration initial du convertisseur (C1) est adjustable par les moyens de réglage en des étapes préétablies, et un mode de fonctionnement fin dans lequel une entrée de tension au convertisseur (C1) est ajustable de manière continue à l'aide d'une résistance variable (Vr).

2. Circuit suivant la revendication 1, dans lequel l'entrée de tension qui est ajustable au moyen de la résistance variable (Vr) est une tension de référence (Vref).

3. Circuit suivant la revendication 1, dans lequel l'entrée de tension qui est ajustable au moyen de la résistance variable (Vr1) est le signal du tension (Vin).

4. Circuit suivant la revendication 1, 2 ou 3, dans lequel les moyens de réglage (D, Vr) comprennent encore un commutateur DIP (D) au moyens duquel le temps d'intégration du convertisseur (C1) est ajustable.

5. Procédé pour établir la portée d'une balance électronique (A, B) qui fournit un signal de tension (Vin) proportionnel au poids d'un article pesé par elle et qui comporte un convertisseur analogique/numérique (C1) du type à intégration pour déduire un signal de sortie numérique du signal de tension (Vin), dans lequel un paramètre de fonctionnement du convertisseur (C1) est ajusté lorsque le balance est chargée d'un poids connu choisi à l'avance, pour amener le signal de sortie numérique vers une valeur désirée correspondant au poids connu choisi à l'avance, caractérisé en ce qu'un temps d'intégration initial du convertisseur (C1) est ajusté grossièrement en des étapes préétablies, et en ce qu'une entree de tension au convertisseur est alors ajustée de manière continue au moyen d'une résistance variable (Vr).

6. Procédé suivant la revendication 5, dans lequel l'entrée de tension qui est ajustée au moyen de la résistance variable (Vr) est une tension de référence (Vref).

7. Procédé suivant la revendication 5, dans lequel l'entrée de tension qui est ajustée au moyen de la résistance variable (Vr1) est le signal de tension (Vin).

# Fig. 1

# Fig. 2

# Fig.3

# Fig.4

# Fig.5

# Fig.6

3

# Fig. 7

```
          ( START )
              │
┌─────────────────────────────┐
│  READ  INDICATED  AREA      │── 1
│  AND  SET  AREA  FLAG       │
└─────────────────────────────┘
              │
┌─────────────────────────────┐
│  PRESET CONTENT  M OF STEP  │── 2
│  MEMORY  TO SUITABLE  VALUE │
└─────────────────────────────┘
              │
          ┌───3───┐
        ◇ IS SPAN COMMAND ◇── yes ──┐
        ◇ SWITCH  ON ? ◇            │
              │ no          ┌─────────────────┐
              │             │  ADJUST  SPAN   │── Sub 1
              │◄────────────└─────────────────┘
              │
    ┌─────────────────────┐
    │   M ÷ 2 = Q ··· R    │── 4      Sub 2
    └─────────────────────┘
              │
  ┌─────────────────────────────┐
  │  OUTPUT  COMMAND  TO SHIFT   │── 5
  │  ANALOG  SWITCH  TO TERMINAL Ia │
  └─────────────────────────────┘
              │
  ┌─────────────────────────────┐
  │   EXECUTE  ONE STEP          │── 6
  └─────────────────────────────┘
              │
  no ──◇   R = 1 ?   ◇── 7
   │         │ yes
   │  ┌─────────────────────────┐
   │  │   EXECUTE  ONE STEP      │── 8
   │  └─────────────────────────┘
   │         │
   └────────►│
    ┌─────────────────┐
    │    Q ← Q - 1     │── 9
    └─────────────────┘
              │
        ◇   Q = 1 ?   ◇── no ──┐
              │ yes      10
  ┌─────────────────────────────────┐
  │  OUTPUT  COMMAND  TO SHIFT ANALOG │── 11
  │  SWITCH  TO TERMINAL  Ib , AND OUTPUT │
  │  RESET AND START COMMANDS TO COUNTER │
  └─────────────────────────────────┘
              │
  ┌─────────────────────────────┐
  │   EXECUTE  A  CERTAIN        │── 12
  │   NUMBER  OF  STEPS          │
  └─────────────────────────────┘
              │
        ◇ IS MSB HIGH ? ◇── yes ──────── 14
              │ no    13          ◇ IS FLAG ON ? ◇── no ──┐
  ┌─────────────────────┐              │ yes             │
  │   IS FLAG ON ?       │── 16   ┌──────────────────┐   │
  └─────────────────────┘        │  TURN  OFF  FLAG  │   │
              │                  │  AND  INCREMENT   │   │
        ◇ IS COUNT STOP ◇── 17   │  OVERFLOW NUMBER BY+1 │
        ◇ SIGNAL HIGH ? ◇        └──────────────────┘   │
              │ yes                      │               │
  ┌─────────────────────────────┐        │          15   │
  │  CALCULATE TOTAL OUTPUT      │── 18   │               │
  │  COUNT OF COUNTER AND OUTPUT │        │               │
  │  RESULT TO MAIN CPU          │        │               │
  └─────────────────────────────┘        │               │
              │                           │               │
  ┌─────────────────────────────┐         │              │
  │   EXECUTE  A  CERTAIN        │── 19    │              │
  │   NUMBER  OF  STEPS          │         │              │
  └─────────────────────────────┘         │              │
```

4

# Fig. 8

```
         ( SPAN  ADJUSTMENT )
                  │
    ┌─────────────────────────────┐
    │ READ AND SET DIGITAL        │──── 01
    │ VALUE Co CORRESPONDING      │
    │ TO  AREA  FLAG              │
    └─────────────────────────────┘
                  │
         ┌──────────────────┐
         │   n  ←  14       │──── 02
         └──────────────────┘
                  │
         ┌──────────────────┐
         │   M  ←  0        │──── 03
         └──────────────────┘
                  │
    ┌─────────────────────────────┐
    │ SET CONTENT  OF SET MEMORY  │──── 04
    │ TO ( M + 2ⁿ⁻¹ )             │
    └─────────────────────────────┘
                  │
         ┌──────────────────┐
         │ A/D CONVERSION   │──── Sub2
         └──────────────────┘
                  │              05
              ◇──────────◇
              │ Co ≧ C ? │────── no
              ◇──────────◇
                  │ yes
         ┌──────────────────┐
         │ M  ←  ( M + 2ⁿ⁻¹ )│──── 06
         └──────────────────┘
                  │
         ┌──────────────────┐
         │   n  ←  n - 1    │──── 07
         └──────────────────┘
                  │
     no       ◇──────────◇
    ─────────│  n = 0 ?  │────── 08
              ◇──────────◇
                  │ yes
    ┌─────────────────────────┐
    │ SET  CONTENT  OF        │──── 09
    │ STEP MEMORY TO M        │
    └─────────────────────────┘
                  │
              STEP 4
```

Equations in the flowchart:

04: SET CONTENT OF SET MEMORY TO $(M + 2^{n-1})$

05: $C_o \geqq C$ ?

06: $M \leftarrow (M + 2^{n-1})$

07: $n \leftarrow n - 1$

08: $n = 0$ ?

# Fig.9

# Fig.10

# Fig.11

```
            ┌───────────┐
            │   START   │
            └─────┬─────┘
                  │
      ┌───────────▼──────────────┐
      │   READ INDICATED AREA    │─── 1
      └───────────┬──────────────┘
      ┌───────────▼──────────────┐
      │ READ OPERATION TIME (Q,R)│─── 2
      │ FOR READ AREA FROM MEMORY│
      └───────────┬──────────────┘
           ┌──────▼──────┐
           │   N ← Q     │─── 3
           └──────┬──────┘
      ┌───────────▼──────────────┐
      │ OUTPUT COMMAND TO SHIFT  │─── 4
      │ ANALOG SWITCH TO TERMINAL 1a│
      └───────────┬──────────────┘
      ┌───────────▼──────────────┐
      │   EXECUTE A CERTAIN      │─── 5
      │   NUMBER OF STEPS        │
      └───────────┬──────────────┘
          no  ┌────▼────┐
        ◄─────│  R = 1 ?│─── 6
              └────┬────┘
                 yes
           ┌──────▼──────────┐
           │ EXECUTE ONE STEP│─── 7
           └──────┬──────────┘
           ┌──────▼──────┐
           │  N ← N - 1  │─── 8
           └──────┬──────┘
              ┌────▼────┐  no
              │  N = 0 ?│────►
              └────┬────┘─── 9
                 yes
      ┌───────────▼──────────────────┐
      │ OUTPUT COMMAND TO SHIFT ANALOG│
      │ SWITCH TO TERMINAL 1b, AND OUTPUT│─── 10
      │ RESET AND START COMMANDS TO COUNTER│
      └───────────┬──────────────────┘
      ┌───────────▼──────────────┐
      │   EXECUTE A CERTAIN      │─── 11
      │   NUMBER OF STEPS        │
      └───────────┬──────────────┘
           ┌──────▼──────┐   yes
           │ IS MSB HIGH?│──────────────────►  ┌──────────────┐
           └──────┬──────┘─── 12        15 ───│  IS FLAG ON ?│─── no
                 no                            └──────┬───────┘
           ┌──────▼──────┐                          yes
           │ IS FLAG ON ?│─── 13          ┌───────────▼──────────┐
           └──────┬──────┘                │  TURN OFF FLAG        │
                  │                        │  AND INCREMENT        │
           ┌──────▼──────┐                 │  OVERFLOW NUMBER BY+1 │
       no  │ IS COUNT STOP│─── 14          └───────────┬──────────┘
      ◄────│ SIGNAL HIGH ?│                        16
           └──────┬──────┘
                 yes
      ┌───────────▼──────────────┐
      │ INPUT COUNT OF COUNTER,  │─── 17
      │ CALCULATE TOTAL OUTPUT   │
      │ COUNT OF COUNTER, AND    │
      │ OUTPUT RESULT TO MAIN CPU│
      └───────────┬──────────────┘
      ┌───────────▼──────────────┐
      │   EXECUTE A CERTAIN      │─── 18
      │   NUMBER OF STEPS        │
      └──────────────────────────┘
```

PRIMARY INTEGRATION TIME

SECONDARY INTEGRATION TIME

OFFSET COMPENSATION PERIOD